# EUROPEAN PATENT APPLICATION

(11) **EP 4 666 887 A2**
(43) Date of publication of application: **24.12.2025**
(21) Application number: 25214880.4
(22) Date of filing: 04.11.2022
(51) Int. Cl.: A24F 40/51

(54) **AEROSOL GENERATING DEVICE**

(30) Priority: 10.11.2021 KR 20210154103; 20.04.2022 KR 20220049129
(62) Divisional of application: 22893122.6
(71) Applicant: KT&G Corporation, Daedeok-gu Daejeon 34337 (KR)
(72) Inventor: KIM, Taehun, Gyeonggi-do 16925 (KR); JUNG, Hyungjin, Seoul 07630 (KR); HAN, Jungho, Daejeon 34021 (KR); YOON, Sungwook, Gyeonggi-do 16534 (KR); PARK, Jueon, Seoul 07630 (KR)
(74) Representative: Schornack, Oliver

(57) **Abstract**

An aerosol generating device is provided. The aerosol generating device includes: a pipe shaped to include an insertion space; a heater having a cylindrical shape that surrounds the insertion space; and an induction coil positioned relative to the heater and being configured to cause the heater to generate heat in accordance with current flowing through the induction coil.

## Description

### [Technical Field]

The present disclosure relates to an aerosol generating device.

### [Background Art]

An aerosol generating device is a device that extracts certain components from a medium or a substance by producing an aerosol. The medium may contain a multicomponent substance. The substance contained in the medium may be a multicomponent flavoring substance. For example, the substance contained in the medium may include a nicotine component, an herbal component, and/or a coffee component. Recently, various research on aerosol generating devices has been conducted.

### [Disclosure]

### [Technical Problem]

It is an objective of the present disclosure to solve the above and other problems.

It is another objective of the present disclosure to provide an aerosol generating device to which a new heating method is applied.

It is yet another objective of the present disclosure to provide an aerosol generating device with a structure that can be easily assembled.

It is yet another objective of the present disclosure to provide an aerosol generating device with heat dissipation performance.

### [Technical Solution]

According to one aspect of the subject matter described in this application, an aerosol generating device includes: a pipe shaped to include an insertion space; a heater having a cylindrical shape that surrounds the insertion space; and an induction coil positioned relative to the heater and being configured to cause the heater to generate heat in accordance with current flowing through the induction coil.

### [Advantageous Effects]

According to at least one of the embodiments of the present disclosure, an aerosol generating device to which a new heating method is applied may be provided.

According to at least one of the embodiments of the present disclosure, an aerosol generating device with a structure that can be easily assembled may be provided.

According to at least one of the embodiments of the present disclosure, an aerosol generating device with heat dissipation performance may be provided.

The additional scope of applicability of the present disclosure will be apparent from the following detailed description. However, those skilled in the art will appreciate that various modifications and alterations are possible, without departing from the idea and scope of the present disclosure, and therefore it should be understood that the detailed description and specific embodiments, such as the preferred embodiments of the present disclosure, are provided only for illustration.

### [Description of Drawings]

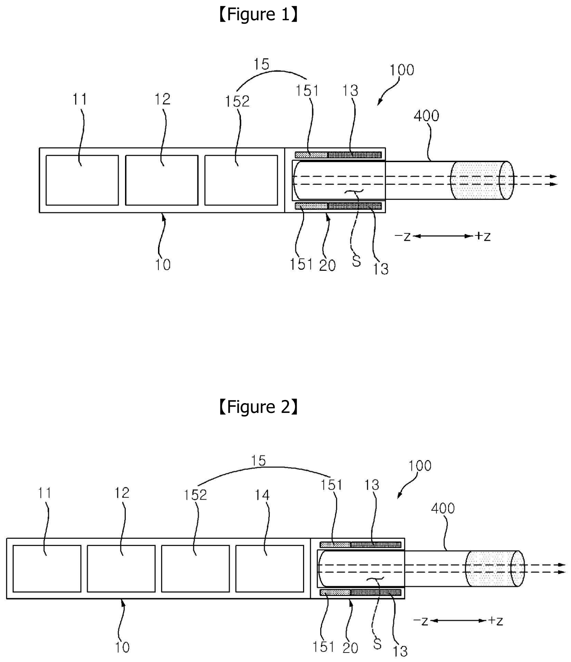

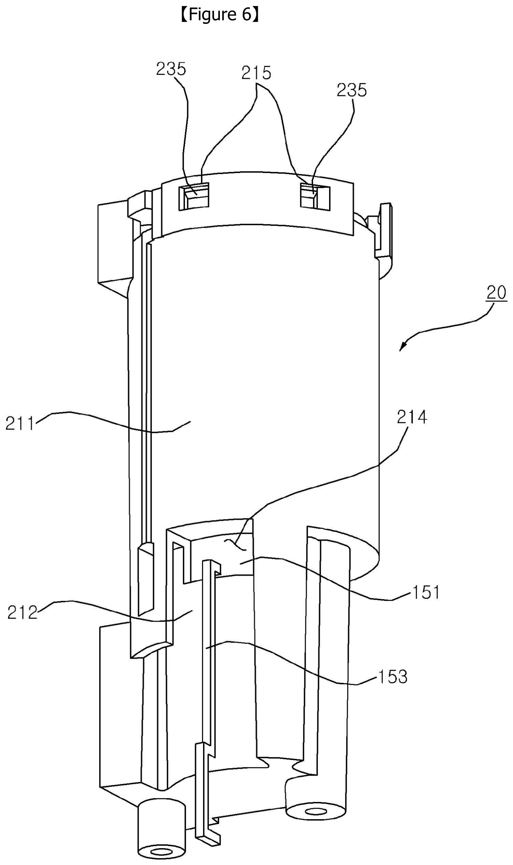

FIGS. 1 to 10 are views illustrating an aerosol generating device according to embodiments of the present disclosure.

### [Mode for Invention]

Description will now be given in detail according to exemplary embodiments disclosed herein, with reference to the accompanying drawings. For the sake of brief description with reference to the drawings, the same or equivalent components are provided with the same or similar reference numerals, and description thereof will not be repeated.

In the following description, a suffix such as "module" and "unit" may be used to refer to elements or components. Use of such a suffix herein is merely intended to facilitate description of the specification, and the suffix itself is not intended to give any special meaning or function.

In the present disclosure, that which is well known to one of ordinary skill in the relevant art has generally been omitted for the sake of brevity. The accompanying drawings are used to help easily understand the technical idea of the present disclosure and it should be understood that the idea of the present disclosure is not limited by the accompanying drawings. The idea of the present disclosure should be construed to extend to any alterations, equivalents, and substitutes besides the accompanying drawings.

It will be understood that although the terms "first", "second", etc. may be used herein to describe various elements, these elements should not be limited by these terms. These terms are only used to distinguish one element from another.

It will be understood that when a component is referred to as being "connected to" or "coupled to" another component, it may be directly connected to or coupled to another component, or intervening components may be present. On the other hand, when a component is referred to as being "directly connected to" or "directly coupled to" another component, there are no intervening components present.

As used herein, a singular representation is intended to include a plural representation unless the context clearly indicates otherwise.

Referring to FIG. 1, an aerosol generating device 100 may include a body 10. The aerosol generating device 100 may include a pipe 20. The aerosol generating device 100 may include at least one of a battery 11, a controller 12, and a heater assembly 13. Referring to FIGS. 2 and 3, the aerosol generating device 100 may further include a cartridge 14.

The battery 11 and the controller 12 may be disposed in the body 10. The heater assembly 13 may be disposed at the pipe 20. The cartridge 14 may be detachably coupled to the body 10. The pipe 20 may be coupled to an inside of the body 10. The pipe 20 may be disposed at an upper portion of the body 10.

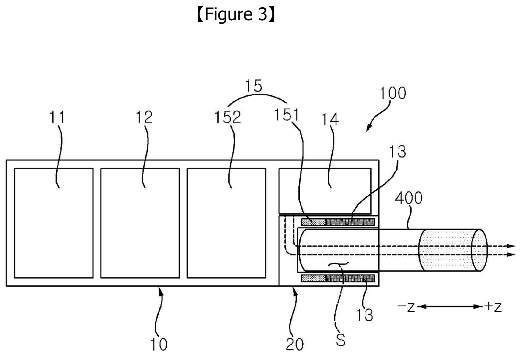

Referring to FIG. 1, the battery 11, the controller 12, and the heater assembly 13 may be arranged in a line. Referring to FIG. 2, the battery 11, the controller 12, the heater assembly 13, and the cartridge 14 may be arranged in a line. Referring to FIG. 3, the cartridge 14 and the heater assembly 13 may be disposed in parallel to face each other. The internal structure of the aerosol generating device 100 is not limited to those shown in the drawings.

The pipe 20 may define an insertion space S. The insertion space S may have an open upper side. The insertion space S may be formed in a shape corresponding to one side of a stick 400. The insertion space S may have a cylindrical shape elongated in an up-and-down direction. The one side of the stick 400 may be inserted into the insertion space S.

The heater assembly 13 may be disposed in the vicinity of the insertion space S. The heater assembly 13 may surround at least a portion of the insertion space S. The heater assembly 13 may surround one side of the stick 400 that is inserted into the insertion space S. The heater assembly 13 may generate an aerosol by heating a medium of the stick 400 inserted into an insertion space and/or the insertion space S.

The battery 11 may supply power to operate at least one of the controller 12, the heater assembly 13, and the cartridge 14. The battery 11 may supply power required to operate a display, a sensor, a motor, and the like installed at the aerosol generating device 100.

The controller 12 may control the overall operation of the aerosol generating device 100. The controller 12 may control the operation of at least one of the battery 11, the heater assembly 13, and the cartridge 14. The controller 12 may control the operation of the display, the sensor, the motor, and the like installed at the aerosol generating device 100. The controller 12 may check the state of each of the components of the aerosol generating device 100 to determine whether the aerosol generating device 100 is in an operable state.

The cartridge 14 may store a liquid therein. The cartridge 14 may use the liquid stored therein to generate an aerosol. The aerosol generated in the cartridge 14 may pass through the stick 400 inserted into the aerosol generating device 100 to be delivered to a user.

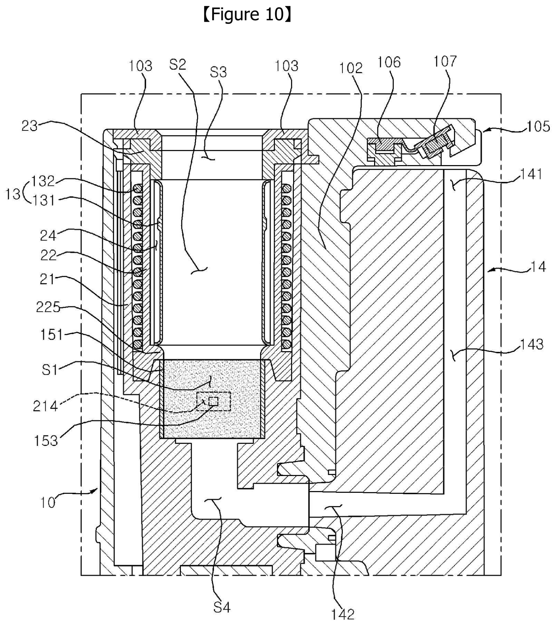

The cartridge 14 may include a liquid chamber in which a liquid is stored, and an atomization chamber in which an aerosol is generated and through which air passes. The cartridge 14 may include a wick disposed in the atomization chamber to be supplied with the liquid from the liquid chamber. The cartridge 14 may include a heating coil that heats the wick to generate an aerosol. Air introduced into an inlet 141 (see FIG. 10) of the cartridge 14 may pass through the atomization chamber to entrain or carry the aerosol, and may then be discharged through an outlet 142 (see FIG. 10) of the cartridge 14.

The aerosol generating device 100 may further include a capacitance sensor 15. The capacitance sensor 15 may include a metal foil 151 and a sensing circuit 152. The metal foil 151 and the sensing circuit 152 may be disposed at positions separated from each other.

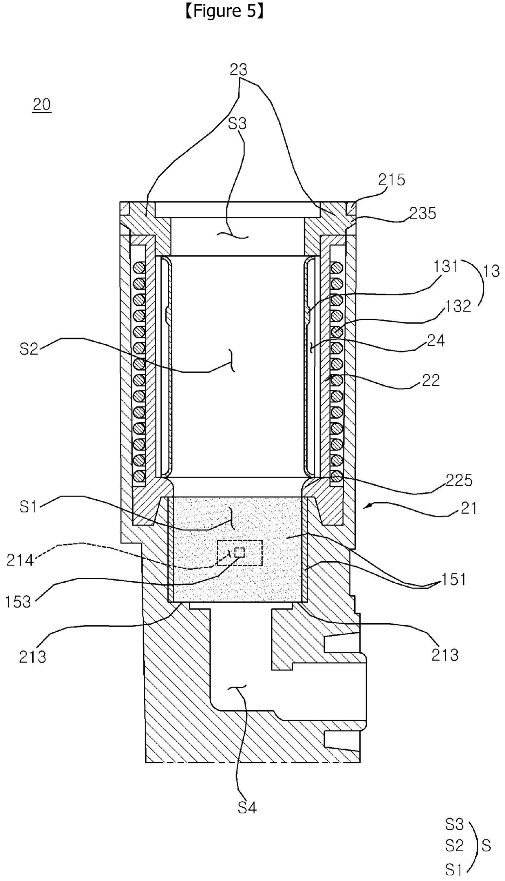

The metal foil 151 may be disposed at the pipe 20. The metal foil 151 may face the insertion space S. The metal foil 151 may cover at least one side of the insertion space S. The metal foil 151 may be disposed under a heater 131 (see FIG. 5). For example, the metal foil 151 may be made of SUS stainless steel.

The sensing circuit 152 may be disposed in the body 10. The sensing circuit 152 may be configured to be printed or mounted on a substrate installed at the body 10. The sensing circuit 152 may be mounted on a substrate on which the controller 12 is mounted, or may be mounted on a separate substrate. The sensing circuit 152 and the metal foil 151 may be electrically connected to each other. The sensing circuit 152 may be connected to the controller 12 to thereby transmit and receive a signal to and from the controller 12.

The capacitance sensor 15 may be a sensor based on one of two sensor technologies, namely, self-capacitance or mutual capacitance. When the capacitance sensor 15 is a self-capacitance type sensor, the metal foil 151 may be formed as one. When the capacitance sensor 15 is a mutual capacitance type sensor, a pair of metal foils 151 spaced apart from each other by a predetermined distance may be provided. In this case, one of the pair of metal foils 151 may be a transmitting electrode, and the other one may be a receiving electrode.

When an object approaches near the metal foil 151, or when an object in the vicinity of the metal foil 151 moves or the state changes, a change in self-capacitance or mutual capacitance sensed by the sensing circuit 152 may occur. Accordingly, the capacitance sensor 15 may sense various information about the stick 200 of the insertion space S. This will be described in detail later.

A lower end of the stick 400 may be inserted into the insertion space S, and an upper end of the stick 400 may be exposed to the outside from the insertion space S. The user may inhale air while holding the upper end of the stick 400 exposed to the outside in his or her mouth. Air may pass through an inside of the aerosol generating device 100 to entrain an aerosol and may then be delivered to the user.

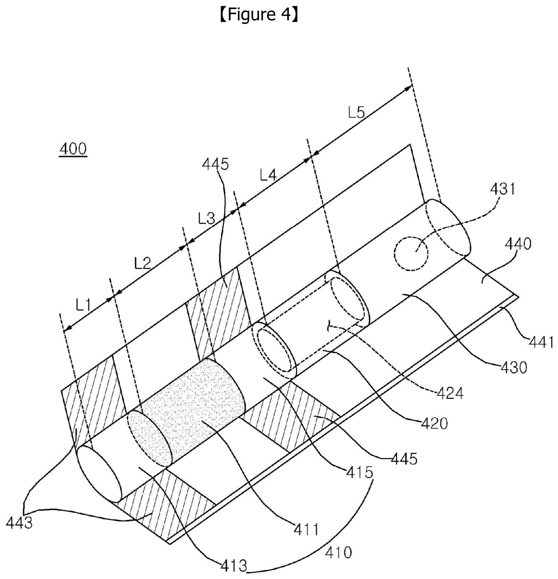

Referring to FIG. 4, the stick 400 may include a medium portion 410. The stick 400 may include a cooling portion 420. The stick 400 may include a filter portion 430. The cooling portion 420 may be disposed between the medium portion 410 and the filter portion 430. The stick 400 may include a wrapper 440. The wrapper 440 may wrap the medium portion 410. The wrapper 440 may wrap the cooling portion 420. The wrapper 440 may wrap the filter portion 430. The stick 400 may have a cylindrical shape.

The medium portion 410 may include a medium 411. The medium portion 410 may include a first medium cover 413. The medium portion 410 may include a second medium cover 415. The medium 411 may be disposed between the first medium cover 413 and the second medium cover 415. The first medium cover 413 may be disposed at one end of the stick 400. The medium portion 410 may have a length of 24 mm.

The medium 411 may contain a multicomponent substance. The substance contained in the medium 411 may be a multicomponent flavoring substance. The medium 411 may be composed of a plurality of granules. Each of the plurality of granules may have a size of 0.4 mm to 1.12 mm. The granules may account for approximately 70% of the volume of the medium 411. A length L2 of the medium 411 may be 10 mm. The first medium cover 413 may be made of an acetate material. The second medium cover 415 may be made of an acetate material. The first medium cover 413 may be made of a paper material. The second medium cover 415 may be made of a paper material. At least one of the first medium cover 413 and the second medium cover 415 may be made of a paper material to be crumpled with wrinkles, and a plurality of gaps may be formed between the wrinkles to allow air to flow therethrough. Each of the gaps may be smaller in size than each of the granules of the medium 411. A length L1 of the first medium cover 413 may be less than the length L2 of the medium 411. A length L3 of the second medium cover 415 may be less than the length L2 of the medium 411. The length L1 of the first medium cover 413 may be 7 mm. The length L3 of the second medium cover 415 may be 7 mm.

Accordingly, each of the granules of the medium 411 may be prevented from being separated from the medium portion 410 and the stick 400.

The cooling portion 420 may have a cylindrical shape. The cooling portion 420 may have a hollow shape. The cooling portion 420 may be disposed between the medium portion 410 and the filter portion 430. The cooling portion 420 may be disposed between the second medium cover 415 and the filter portion 430. The cooling portion 420 may be formed in the shape of a tube that surrounds a cooling path 424 formed therein. The cooling portion 420 may be thicker than the wrapper 440. The cooling portion 420 may be made of a paper material thicker than that of the wrapper 440. A length L4 of the cooling portion 420 may be equal or similar to the length L2 of the medium 411. The length L4, which is the length of the cooling portion 420 and the cooling path 424, may be 10 mm. When the stick 400 is inserted into the aerosol generating device 100, at least a portion of the cooling portion 420 may be exposed to an outside of the aerosol generating device 100.

Accordingly, the cooling portion 420 may support the medium portion 410 and the filter portion 430, and may achieve the rigidity of the stick 400. In addition, the cooling portion 420 may support the wrapper 440 between the medium portion 410 and the filter portion 430, and may provide a portion to which the wrapper 440 is adhered. In addition, heated air and aerosol may be cooled while passing through the cooling path 424 in the cooling portion 420.

The filter portion 430 may be configured as a filter made of an acetate material. The filter portion 430 may be disposed at another end of the stick 400. When the stick 400 is inserted into the aerosol generating device 100, the filter portion 430 may be exposed to the outside of the aerosol generating device 100. The user may inhale air while holding the filter portion 430 in his or her mouth. A length L5 of the filter portion 430 may be 14 mm.

The wrapper 440 may wrap or surround the medium portion 410, the cooling portion 420, and the filter portion 430. The wrapper 440 may define an outer appearance or shape of the stick 400. The wrapper 440 may be made of a paper material. An adhesive portion 441 may be formed along one edge of the wrapper 440. The wrapper 440 may wrap the medium portion 410, the cooling portion 420 and the filter portion 430, and the adhesive portion 441 formed along the one edge of the wrapper 440 and another edge of the wrapper 440 may be adhered to each other. The wrapper 440 may wrap the medium portion 410, the cooling portion 420, and the filter portion 430, but may not cover one end and another end of the stick 400.

Accordingly, the wrapper 440 may fix the medium portion 410, the cooling portion 420, and the filter portion 430, and may prevent these components from being separated from the stick 400.

A first thin film 443 may be disposed at a position corresponding to the first medium cover 413. The first thin film 443 may be disposed between the wrapper 440 and the first medium cover 413, or may be disposed outside the wrapper 440. The first thin film 443 may surround the first medium cover 413. The first thin film 443 may be made of a metal material. The first thin film 443 may be made of an aluminum material. The first thin film 443 may be in close contact with or coated on the wrapper 440.

A second thin film 445 may be disposed at a position corresponding to the second medium cover 415. The second thin film 445 may be disposed between the wrapper 440 and the second medium cover 415, or may be disposed outside the wrapper 440. The second thin film 445 may be made of a metal material. The second thin film 445 may be made of an aluminum material. The second thin film 445 may be in close contact with or coated on the wrapper 440.

Accordingly, the capacitance sensor 15 may detect whether the stick 400 is inserted into the aerosol generating device 100.

Referring to FIGS. 5 to 7, the pipe 20 may be installed at the body 10 (see FIGS. 1 to 3). The pipe 20 may define therein the insertion space S elongated in the up-and-down direction.

The pipe 20 may include an outer pipe 21 and an inner pipe 22. The outer pipe 21 may define an outer shape of the pipe 20. The outer pipe 21 may surround the insertion space S. The outer pipe 21 may have a shape elongated in the up-and-down direction. The insertion space S may have a shape elongated inside the outer pipe 21 in the up-and-down direction.

The insertion space S may include a first insertion space S1 and a second insertion space S2. The first insertion space S1 and the second insertion space S2 may be disposed up and down. The first insertion space S1 may be disposed under the second insertion space S2. The first insertion space S1 may define a lower portion of the insertion space S. The first insertion space S1 and the second insertion space S2 may be in communication with each other.

A cap 23 may be open to define an insertion hole S3, and the insertion hole S3 may be disposed on the second insertion space S2. The insertion hole S3 may be in communication with the second insertion space S2. The insertion hole S3 may be in communication with an outside of the pipe 20. The insertion hole S3 may define an upper end of the insertion space S. The outer pipe 21 may surround the first insertion space S1, the second insertion space S2, and the insertion hole S3.

The outer pipe 21 may define an inflow passage S4 in communication with a lower end of the insertion space S or the first insertion space S1. The inflow passage S4 may include a section extending downward from the lower end of the insertion space S or the first insertion space S1. The outside of the pipe 20 and the insertion space S may communicate with each other via the inflow passage S4. For example, the inflow passage S4 may provide communication, through an inlet port (not shown), between the outlet 142 of the cartridge 14 and the insertion space S (see FIG. 10). For example, air and/or aerosol discharged from the cartridge 14 may be introduced into the insertion space S through the inflow passage S4. The cartridge 14 and the inflow passage S4 may not be provided (excluded), and the lower end of the insertion space S may be closed or blocked.

The inner pipe 22 may be disposed at an inside of the outer pipe 21. An inner circumferential surface of the inner pipe 22 may have a cylindrical shape extending in the up-and-down direction. The second insertion space S2 may be formed at a position corresponding to the inner pipe 22. The inner pipe 22 may surround the second insertion space S2. The outer pipe 21 may surround an outer circumferential surface of the inner pipe 22. The outer pipe 21 may support a lower portion of the inner pipe 22.

The metal foil 151 may be disposed below the inner pipe 22. The first insertion space S1 may be formed at a position corresponding to the metal foil 151. The metal foil 151 may surround the first insertion space S1. A cross section of the metal foil 151 may have a ring shape or a 'C' shape. The outer pipe 21 may extend from an upper side of the inner pipe 22 to a lower side of the metal foil 151, so as to cover the inner pipe 22 and the metal foil 151.

The metal foil 151 may be coupled to an inner circumferential surface of the outer pipe 21 at a position below the inner pipe 22. The metal foil 151 may be in contact with the first insertion space S1. Alternatively, a surface of the metal foil 151 that faces the first insertion space S1 may be covered with a protective film. The metal foil 151 may be disposed below the inner pipe 22 and the heater 131. The metal foil 151 may be disposed on a lower side of a rib 225. An upper end of the metal foil 151 may be supported by the rib 225. A lower end of the metal foil 151 may be supported by a stopper 213 that supports the lower end of the stick 400. The stopper 213 may be formed such that the outer pipe 21 protrudes radially inward at the lower side of the metal foil 151.

A side wall of the pipe 20 may extend along a longitudinal direction of the insertion space S. The side wall of the pipe 20 may be open to define a lead hole 214. A side wall of the outer pipe 21 may be open to define the lead hole 214. The lead hole 214 may be formed at a position corresponding to the metal foil 151. The metal foil 151 may include a portion disposed between the lead hole 214 and the first insertion space S1. The metal foil 151 may cover the lead hole 214.

A lead wire 153 may provide electrical connection, through the lead hole 214, between the metal foil 151 and the sensing circuit 152. The lead wire 153 may be soldered to a surface of the metal foil 151 that is exposed to the lead hole 214. The lead wire 153 may extend outward of the pipe 20 from the metal foil 151 to the sensing circuit 152. The sensing circuit 152 may sense, through the lead wire 153, a change in capacitance of the metal foil 151.

Accordingly, the metal foil 151 and the sensing circuit 152 (see FIGS. 1 to 3) included in the capacitance sensor 15 may be disposed to be separated from each other. The metal foil 151 may be disposed inside the pipe 20, and the sensing circuit 152 may be disposed outside the pipe 20.

In addition, the metal foil 151 may be integrally formed with the outer pipe 21. In this case, the metal foil 151 may be integrally formed with the outer pipe 21, but a boundary that separates or distinguishes the metal foil 151 from the outer pipe 21 may be formed. For example, the outer pipe 21 may be injected to the metal foil 151. For example, the metal foil 151 may be inserted into an injection mold having the shape of the outer pipe 21, and then an injection molded product melted in the injection mold may be cooled and solidified to allow the outer pipe 21 to be insert-injected to the metal foil 151.

Further, a distance between the stick 400 and the metal foil 151 may be minimized to thereby improve the sensing reliability of the capacitance sensor 15. As a result, a separate process of assembling the capacitance sensor 15 to the pipe 20 may be excluded, and a coupling process may be simplified.

The second insertion space S2 may be formed at a position corresponding to the heater assembly 13. The heater assembly 13 may surround the second insertion space S2. The inner pipe 22 may surround a circumference of the heater assembly 13. The inner pipe 22 may support a lower end of the heater assembly 13.

The heater assembly 13 may include the heater 131 and an induction coil 132. The heater 131 may be made of a resistive metal. The heater 131 may be an induction heater that generates heat by an eddy current generated by a magnetic field produced by a current flowing through the induction coil 132. Alternatively, the heater 131 may be a heater that generates heat by being directly supplied with a current.

The heater 131 may have a cylindrical shape surrounding the second insertion space S2. The heater 131 may surround an outer circumferential surface of the second insertion space S2. The heater 131 may be in contact with the second insertion space S2. A lower end of the heater 131 may be supported by the rib 225 of the inner pipe 22. An upper end of the heater 131 may be supported by the cap 23. The heater 131 may be made of a metal such as SUS stainless steel. When heat is generated by the heater 131, the heat may be conducted to the second insertion space S2.

The induction coil 132 may be disposed between the inner pipe 22 and the outer pipe 21. The induction coil 132 may be wound around the outer circumferential surface of the inner pipe 22 and the heater 131. The induction coil 132 may have a height corresponding to the heater 131. The induction coil 132 may cause the heater 131 to generate heat.

The inner pipe 22 may surround a circumference of the heater 131. The inner pipe 22 may be disposed between the heater 131 and the induction coil 132. The inner pipe 22 may be disposed side by side with the heater 131 and the induction coil 132. The inner pipe 22 may have a height that substantially corresponds to the heater 131 and the induction coil 132. Accordingly, the inner pipe 22 may prevent electrical contact between the heater 131 and the induction coil 132.

The rib 225 of the inner pipe 22 may allow the metal foil 151 and the heater 131 to be separated from each other. The rib 225 may protrude radially inward from the lower portion of the inner pipe 22. The rib 225 may extend in a circumferential direction along a circumference of the insertion space S. The heater 131 may be disposed on an upper side of the rib 225. The lower end of the heater 131 may be supported by an upper surface of the rib 225. The metal foil 151 may be disposed on the lower side of the rib 225. The upper end of the metal foil 151 may be supported by a lower surface of the rib 225. Accordingly, the inner pipe 22 may prevent electrical contact between the metal foil 151 and the heater 131. This will be further described later.

An air gap 24 may be disposed between the heater 131 and the inner pipe 22. The air gap 24 may be covered by the heater 131 and the inner pipe 22. The air gap 24 may surround the circumference of the heater 131. The air gap 24 may be formed between the heater 131 and the induction coil 132. The air gap 24 may dissipate heat generated from the heater 131.

Accordingly, the heat generated from the heater 131 may be prevented from being transferred to the outside of the pipe 20. In addition, damage to the structure of the pipe 20 due to the heat generated from the heater 131 may be prevented. Further, heating of the induction coil 132 by the heat generated from the heater 131 may be reduced.

The cap 23 may be open in the up-and-down direction to define the insertion hole S3. The cap 23 may be disposed at an upper end of the pipe 20. The cap 23 may be disposed at the inside of the outer pipe 21. A circumference of the cap 23 may be surrounded by an inner circumferential surface of an upper end of the outer pipe 21. The cap 23 may be coupled to an upper end portion of the outer pipe 21. An upper end of the cap 23 may face an upper side of the pipe 20. A lower end of the cap 23 may cover and support an upper end of the inner pipe 22. The lower end of the cap 23 may cover and support the upper end of the heater 131.

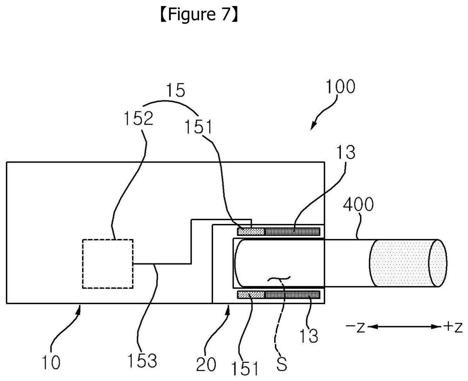

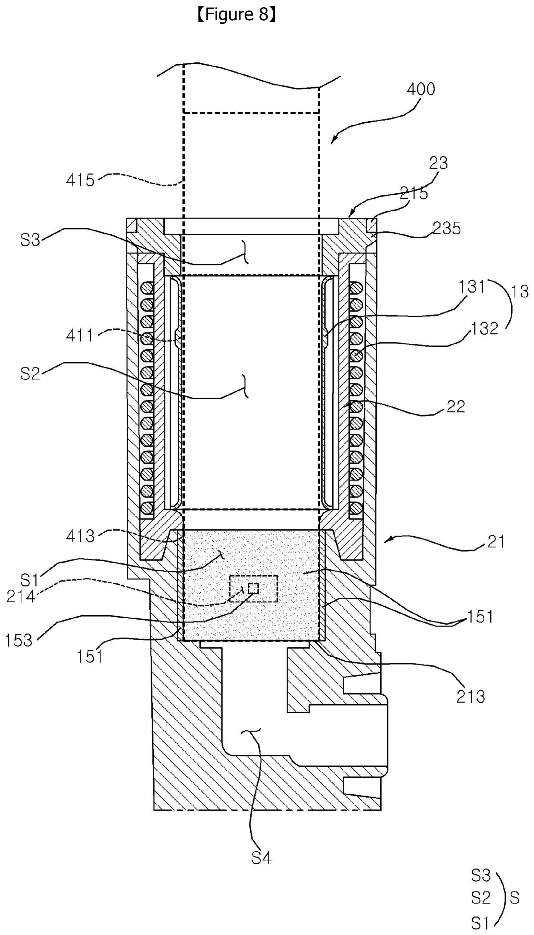

Referring to FIGS. 7 and 8, the stick 400 may be inserted into the insertion space S. The stick 400 may be sequentially inserted into the insertion hole S3, the second insertion space S2, and the first insertion space S1. The lower end of the stick 400 or the first medium cover 413 of the stick 400 may be disposed at a position corresponding to the first insertion space S1. The lower end of the stick 400 may be supported by the stopper 213 provided at the lower end of the insertion space S. The medium 411 of the stick 400 may be disposed at a position corresponding to the second insertion space S2. Air and/or aerosol may be introduced into the pipe 20 through the inflow passage S4 to flow to the stick 400 inserted into the insertion space S.

As the sensing circuit 152 connected to the metal foil 151 detects a change in capacitance, the capacitance sensor 15 may sense various information of the insertion space S.

The capacitance sensed by the sensing circuit 152 may differ according to insertion or non-insertion of the stick 400 into the insertion space S. Accordingly, the capacitance sensor 15 may detect whether the stick 400 is inserted into the insertion space S.

When the stick 400 is inserted into the insertion space S, the amount of moisture of a lower portion of the stick 400 or the first medium cover 413 may vary depending on the extent of use (the used extent of the stick 400), and accordingly, a change in capacitance sensed by the sensing circuit 152 may occur. Thus, the capacitance sensor 15 may detect the extent to which the stick 400 is used, or may detect whether the stick 400 is reused.

The function of the capacitance sensor 15 is not limited to the above description, and the capacitance sensor 15 may be used as long as the state of the surroundings can be determined through factors causing a change in capacitance. To this end, a lookup table that indicates a capacitance value sensed by the capacitance sensor 15 and its corresponding state of change in the surrounding environment may be stored in the memory.

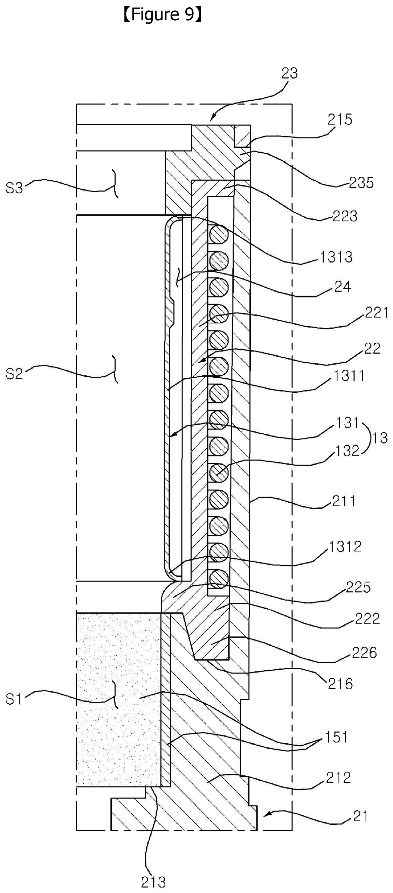

Referring to FIG. 9, the outer pipe 21 may include a first outer pipe body 211 and a second outer pipe body 212. The first outer pipe body 211 may be disposed on the second outer pipe body 212. The first outer pipe body 211 may extend upward from an upper end of the second outer pipe body 212 in an elongated manner. The second insertion space S2 and the insertion hole S3 may be formed at positions corresponding to the first outer pipe body 211. An inner circumferential surface of the first outer pipe body 211 may have a cylindrical shape. The first outer pipe body 211 may surround the inner pipe 22. The first insertion space S1 and the inflow passage S4 may be formed at positions corresponding to the second outer pipe body 212. The second outer pipe body 212 may support the lower portion of the inner pipe 22.

The inner pipe 22 may include an inner pipe body 221. The inner pipe body 221 may extend in the up-and-down direction or vertically in an elongated manner, and may have a cylindrical shape. The inner pipe body 221 may be provided side by side with the first outer pipe body 211. The inner pipe body 221 may be spaced apart from the first outer pipe body 211 in a radially inward direction to form a gap in which the induction coil 132 is disposed. The inner pipe body 221 may surround the second insertion space S2 and the circumference of the heater 131.

The inner pipe 22 may include a first inner pipe bending portion 222. The first inner pipe bending portion 222 may be formed at a lower end of the inner pipe 22. The first inner pipe bending portion 222 may be bent radially outward from a lower end of the inner pipe body 221. The first inner pipe bending portion 222 may extend in the circumferential direction along a circumference of the inner pipe 22. The first inner pipe bending portion 222 may have a ring shape. The first inner pipe bending portion 222 may support a lower end of the induction coil 132. The first inner pipe bending portion 222 may be in contact with a lower inner circumferential surface of the first outer pipe body 211 to be supported horizontally. The first inner pipe bending portion 222 may be supported by the upper end of the second outer pipe body 212.

The inner pipe 22 may include a second inner pipe bending portion 223. The second inner pipe bending portion 223 may be formed at the upper end of the inner pipe 22. The second inner pipe bending portion 223 may be bent radially outward from an upper end of the inner pipe body 221. The second inner pipe bending portion 223 may extend in the circumferential direction along the circumference of the inner pipe 22. The second inner pipe bending portion 223 may be inclined upward along a radially outward direction. The second inner pipe bending portion 223 may be disposed at an upper side of the induction coil 132. The second inner pipe bending portion 223 may cover the induction coil 132. The second inner pipe bending portion 223 may be supported by the cap 23. The second inner pipe bending portion 223 may be in contact with an upper inner circumferential surface of the first outer pipe body 211 to be supported horizontally.

The inner pipe 22 may include the rib 225. The rib 225 may be formed at the lower portion of the inner pipe 22. The rib 225 may protrude radially inward from an inner circumferential surface of the lower portion of the inner pipe body 221. The rib 225 may extend in the circumferential direction along the circumference of the insertion space S. The rib 225 may have a ring shape.

The rib 225 may be disposed between the heater 131 and the metal foil 151. The rib 225 may allow the heater 131 and the metal foil 151 to be separated from each other. The rib 225 may be disposed on a lower side of the heater 131. The rib 225 may support the lower end of the heater 131. The rib 225 may be supported by the upper end of the second outer pipe body 212. The rib 225 may be disposed on an upper side of the metal foil 151. The rib 225 may cover and support the upper end of the metal foil 151. The metal foil 151 may be integrally formed on an inner surface of the inner pipe body 212. The metal foil 151 may be disposed to be aligned with the heater 131 at a position under the heater 131. The first inner pipe bending portion 222 may support the lower end of the induction coil 132.

Accordingly, the heater assembly 13 and the metal foil 151 may be separated from each other to thereby prevent contact therebetween.

The inner pipe 22 may include an insertion portion 226. The insertion portion 226 may be formed at the lower end of the inner pipe 22. The insertion portion 226 may protrude downward from the first inner pipe bending portion 222. The insertion portion 226 may be supported by being inserted into an insertion recess 216 formed at an upper end portion of the second outer pipe body 212.

The heater 131 may include a heater body 1311. The heater body 1311 may have a cylindrical shape elongated vertically. An inner circumferential surface of the heater body 1311 may surround a circumference of the second insertion space S2. An outer circumferential surface of the heater body 1311 may be surrounded by the air gap 24. The heater body 1311 may be spaced apart from an inner circumferential surface of the inner pipe body 221 in the radially inward direction to thereby form the air gap 24.

The heater 131 may include a first heater bending portion 1312. The first heater bending portion 1312 may be formed at the lower end of the heater 131. The first heater bending portion 1312 may be bent radially outward from a lower end of the heater body 1311. The first heater bending portion 1312 may be inclined downward along the radially outward direction. The first heater bending portion 1312 may be supported by the rib 225. The first heater bending portion 1312 and the rib 225 may overlap each other in the up-and-down direction.

The heater 131 may include a second heater bending portion 1313. The second heater bending portion 1313 may be formed at the upper end of the heater 131. The second heater bending portion 1313 may be bent radially outward from an upper end of the heater body 1311. The second heater bending portion 1313 may be inclined upward along the radially outward direction. The second heater bending portion 1313 may be supported by the cap 23. The cap 131 and the second heater bending portion 1313 may overlap each other in the up-and-down direction.

The induction coil 132 may be provided among the inner pipe body 221, the first inner pipe bending portion 222, the second inner pipe bending portion 223, and the first outer pipe body 211. The induction coil 132 may be wound around the inner pipe body 221. The lower end of the induction coil 132 may be supported by the first inner pipe bending portion 222. The induction coil 132 may be covered by the second inner pipe bending portion 223. The first outer pipe body 211 may surround the induction coil 132. The induction coil 132 may be disposed at a position corresponding to the heater 131. The induction coil 132 may generate or induce an eddy current in the heater 131 by an induction magnetic field, so as to allow the heater 131 to generate heat.

The air gap 24 may be formed among the heater body 1311, the first heater bending portion 1312, the second heater bending portion 1313, and the inner circumferential surface of the inner pipe body 221. The air gap 24 may surround an outer circumferential surface of the heater 131. The air gap 24 may be formed as an air layer to dissipate heat generated from the heater 131.

Accordingly, the heat generated from the heater 131 may be prevented from being transferred to the outside of the pipe 20. In addition, damage to the structure of the pipe 20 due to the heat generated from the heater 131 may be prevented.

The cap 23 may be surrounded by the upper inner circumferential surface of the first outer pipe body 211. The cap 23 may be disposed on the heater assembly 13 and the inner pipe 22. An inner circumferential surface of the cap 23 may surround a circumference of the insertion hole S3. The cap 23 may be coupled to an upper end of the first outer pipe body 211. The cap 23 may be fixed to the first outer pipe body 211 to support the upper end of the inner pipe 22 or the second inner pipe bending portion 223. The cap 23 may be fixed to the first outer pipe body 211 to support the upper end of the heater 131 or the second heater bending portion 1313. The cap 23 may fix the positions of the heater 131, the induction coil 132, and the inner pipe 22, thereby preventing separation of the heater 131, the induction coil 132, and the inner pipe 22 from the pipe 20.

A coupler (215 and 235) may allow the cap 23 and the outer pipe 21 to be coupled to each other. The coupler (215 and 235) may be provided at an outer circumferential surface of the cap 23 and the upper end of the first outer pipe body 211. The coupler (215 and 235) may include a coupling protrusion 235 and a coupling recess 215. For example, the coupling protrusion 235 may protrude from the outer circumferential surface of the cap 23. The coupling recess 215 may be formed by opening an upper end surface of the first outer pipe body 211. The coupling protrusion 235 and the coupling recess 215 may be coupled to each other in a snap-fit manner.

The aerosol generating device 100 according to an embodiment of the present disclosure may be manufactured by the following method. First, the metal foil 151 and the outer pipe 21 may be coupled to each other. Here, the metal foil 151 may be integrally formed with the outer pipe 21 by injection molding or the like. Then, the inner pipe 22 surrounded by the induction coil 132 may be inserted into the outer pipe 21. Then, the heater 131 may be inserted into the inner pipe 22. The heater 131 and the inner pipe 22 may be inserted together into the outer pipe 21. And then, the cap 23 may be coupled to the outer pipe 21 to thereby fix the inner pipe 22, the heater 131, and the induction coil 132.

Accordingly, the structure of the pipe 20 may be securely coupled without the need for a separate bonding process.

Referring to FIG. 10, the cartridge 14 may be detachably coupled to one side of the body 10. The cartridge 14 may be disposed side by side with the pipe 20. The cartridge 14 may be disposed in parallel with the pipe 20. The body 10 may include a partition wall 102. The partition wall 102 may be formed between the pipe 20 and the cartridge 14. The partition wall 102 may extend side by side with the pipe 20. The partition wall 102 may extend in the up-and-down direction. One surface of the partition wall 102 may support one side of the pipe 20. The cartridge 14 may be coupled to the body 10 in a manner of facing another surface of the partition wall 102. The cartridge 14 may be coupled to the partition wall 102. The another surface of the partition wall 102 may support one side of the cartridge 14. The pipe 20 and the cartridge 14 may be separated from each other by the partition wall 102.

The cartridge 14 may have the inlet 141 and the outlet 142. The inlet 141 may be formed at one side of an upper end of the cartridge 14. The inlet 141 may be open upward. The outlet 142 may be formed at one side of a lower portion of the cartridge 14. The outlet 142 may be open toward the pipe 20 side. The inlet 141 and the outlet 142 may communicate with each other via a cartridge passage 143 in the cartridge 14. When the cartridge 14 is coupled to the body 10, the outlet 142 and the inlet passage S4 may communicate with each other. Air passing through the cartridge 14 may entrain an aerosol in the cartridge 14 to be discharged to the outlet 142. Accordingly, when the user inhales air while holding the stick 400 inserted into the insertion space S in his or her mouth, air may be introduced into the cartridge 14 from an outside of the cartridge 14 through the inlet 141, and may then sequentially flow to the cartridge passage 143, the outlet 142, and the inflow passage S4 to pass through the stick 400 inserted into the insertion space S.

A cover 103 may be coupled to an upper end of the body 10, and may cover the upper end of the pipe 20 or the cap 23. The cover 103 may support the pipe 20. The cover 103 may prevent the pipe 20 from being separated from the body 10. The cover 103 may define an opening corresponding to the insertion space S.

The body 10 may include an extended portion 105. The extended portion 105 may extend horizontally from an upper end of the partition wall 102 so as to cover the upper end of the cartridge 14. The extended portion 105 may cover the inlet 141. The extended portion 105 may prevent a foreign material from being introduced into the inlet 141. The extended portion 105 may be spaced upward from the inlet 141 by a predetermined distance to form a gap through which air is introduced into the inlet 141.

The aerosol generating device 100 may include a first sensor 106. The first sensor 106 may be disposed in the extended portion 105. The first sensor 106 may face the cartridge 14. The first sensor 106 may detect whether the cartridge 14 is mounted to the body 10. For example, the first sensor 106 may be a proximity sensor. The first sensor 106 may be connected to the controller 12 (see FIGS. 1 to 3). The first sensor 106 may transmit a signal to the controller 12, and the controller 12 may determine whether the cartridge 14 is mounted to the body 10 based on the signal received from the first sensor 106. When the cartridge 14 is not mounted to the body 10, the controller 12 may control such that the aerosol generating device 100 does not operate. For example, when the cartridge 14 is not mounted to the body 10, the controller 12 may control such that a current does not flow through the induction coil 132.

The aerosol generating device 100 may include a second sensor 107. The second sensor 107 may be disposed adjacent to the inlet 141. The second sensor 107 may face the inlet 141. The second sensor 107 may sense a flow of surrounding air. For example, the second sensor 107 may be an air flow sensor or a pressure sensor. The second sensor 107 may sense air flowing from the outside to the inlet 141. The second sensor 107 may be connected to the controller 12 (see FIGS. 1 to 3). The second sensor 107 may transmit a signal to the controller 12, and the controller 12 may determine whether air is introduced into the inlet 141 based on the signal received from the second sensor 107. When the air is introduced into the inlet 141, the controller 12 may control such that a current flows through the induction coil 132 to allow the heater 131 to generate heat. When the air is introduced into the inlet 141, the controller 12 may also control a heater in the cartridge 14 to generate heat, allowing an aerosol to be produced in the cartridge 14.

Referring to FIGS. 1 to 10, an aerosol generating device according to one aspect of the present disclosure may include: a pipe shaped to include an insertion space; a heater having a cylindrical shape that surrounds the insertion space; and an induction coil positioned relative to the heater and being configured to cause the heater to generate heat in accordance with current flowing through the induction coil.

According to another aspect of the present disclosure, the pipe may include: an inner pipe disposed between the heater and the induction coil, and positioned to surround an outer side of the heater; and an outer pipe positioned to surround the inner pipe and the induction coil.

According to another aspect of the present disclosure, the inner pipe may include: an inner pipe body extending relative to an inner circumferential surface of the outer pipe, wherein an outer side of the inner pipe body may be surrounded by the induction coil; a first inner pipe bending portion bent radially outward from a lower end of the inner pipe body and contacting the inner circumferential surface of the outer pipe, the first inner pipe bending portion supporting a lower end of the induction coil; and a second inner pipe bending portion bent radially outward from an upper end of the inner pipe body and contacting the inner circumferential surface of the outer pipe, the second inner pipe bending portion covering an upper end of the induction coil.

According to another aspect of the present disclosure, the outer pipe may support a lower end of the inner pipe.

According to another aspect of the present disclosure, the inner pipe may comprise a rib protruding radially inward from a lower portion of the inner pipe to support a lower end of the heater.

According to another aspect of the present disclosure, the aerosol generating device may further include a cap coupled to the outer pipe to contact an upper end of the heater, wherein the cap is shaped to define an insertion hole in communication with the insertion space.

According to another aspect of the present disclosure, the cap may couple to an upper end of the inner pipe.

According to another aspect of the present disclosure, the aerosol generating device may further include a coupler that connects the cap and the outer pipe.

According to another aspect of the present disclosure, the coupler may include: a coupling protrusion protruding from an outer circumferential surface of the cap; and a coupling recess formed by an opening of an upper circumferential wall of the outer pipe and into which the coupling protrusion is inserted to allow the cap and the outer pipe to be coupled to each other.

According to another aspect of the present disclosure, the heater may be positioned relative to the inner pipe to form an air gap between the heater and the inner pipe.

According to another aspect of the present disclosure, the heater may include: a heater body having a cylindrical shape extending relative to the inner pipe; a first heater bending portion bent radially outward from a lower end of the heater body and contacting a lower inner circumferential surface of the inner pipe; and a second heater bending portion bent radially outward from an upper end of the heater body and contacting an upper inner circumferential surface of the inner pipe, wherein the air gap is an area defined by the heater body, the first heater bending portion, the second heater bending portion, and an inner circumferential surface of the inner pipe.

According to another aspect of the present disclosure, an aerosol generating device according to one aspect of the present disclosure may include: a heater having an elongated shape that defines an insertion space; an inner pipe positioned relative to an outer side of the heater; an induction coil positioned relative to the inner pipe and proximate to the heater, wherein the induction coil is configured to cause the heater to generate heat in accordance with current flowing through the induction coil; an outer pipe shaped to surround the inner pipe and the induction coil.

According to another aspect of the present disclosure, the inner pipe may comprise: an inner pipe body extending relative to a portion of an inner circumferential surface of the outer pipe, wherein the induction coil surrounds a portion of an outer side of the inner pipe body; a first inner pipe bending portion bent radially outward from a lower end of the inner pipe body and contacting a portion of the inner circumferential surface of the outer pipe, the first inner pipe bending portion supporting a lower end of the induction coil; and a second inner pipe bending portion bent radially outward from an upper end of the inner pipe body and contacting a portion of the inner circumferential surface of the outer pipe, the second inner pipe bending portion covering an upper end of the induction coil.

According to another aspect of the present disclosure, the heater may be positioned relative to the inner pipe to form an air gap between an outer side of the heater and an inner side of the inner pipe, wherein the heater may comprise: a heater body having a cylindrical shape extending relative to the inner pipe; a first heater bending portion bent radially outward from a lower end of the heater body and contacting a portion of a lower inner circumferential surface of the inner pipe; and a second heater bending portion bent radially outward from an upper end of the heater body and contacting a portion of an upper inner circumferential surface of the inner pipe.

Certain embodiments or other embodiments of the disclosure described above are not mutually exclusive or distinct from each other. Any or all elements of the embodiments of the disclosure described above may be combined with another or combined with each other in configuration or function.

For example, a configuration "A" described in one embodiment of the disclosure and the drawings, and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings, and the appended claims. In addition to variations and modifications in the component parts and/or arrangements, alternative uses will also be apparent to those skilled in the art.

The present disclosure also provides for the following examples:
1. An aerosol generating device comprising:
   a pipe shaped to include an insertion space;
   a heater having a cylindrical shape that surrounds the insertion space; and
   an induction coil positioned relative to the heater and being configured to cause the heater to generate heat in accordance with current flowing through the induction coil.
2. The aerosol generating device of example 1, wherein the pipe comprises:
   an inner pipe disposed between the heater and the induction coil, and positioned to surround an outer side of the heater; and
   an outer pipe positioned to surround the inner pipe and the induction coil.
3. The aerosol generating device of example 2, wherein the inner pipe comprises:
   an inner pipe body extending relative to an inner circumferential surface of the outer pipe, wherein an outer side of the inner pipe body is surrounded by the induction coil;
   a first inner pipe bending portion bent radially outward from a lower end of the inner pipe body and contacting the inner circumferential surface of the outer pipe, the first inner pipe bending portion supporting a lower end of the induction coil; and
   a second inner pipe bending portion bent radially outward from an upper end of the inner pipe body and contacting the inner circumferential surface of the outer pipe, the second inner pipe bending portion covering an upper end of the induction coil.
4. The aerosol generating device of example 2, wherein the outer pipe supports a lower end of the inner pipe.
5. The aerosol generating device of example 2, wherein the inner pipe comprises a rib protruding radially inward from a lower portion of the inner pipe to support a lower end of the heater.
6. The aerosol generating device of example 2, wherein the inner pipe comprises a rib protruding radially inward from a lower portion of the inner pipe to support a lower end of the heater.
7. The aerosol generating device of example 6, wherein the cap couples to an upper end of the inner pipe.
8. The aerosol generating device of example 6, further comprising a coupler connecting the cap and the outer pipe.
9. The aerosol generating device of example 8, wherein the coupler comprises:
   a coupling protrusion protruding from an outer circumferential surface of the cap; and
   a coupling recess formed by an opening of an upper circumferential wall of the outer pipe and into which the coupling protrusion is inserted to allow the cap and the outer pipe to be coupled to each other.
10. The aerosol generating device of example 2, wherein the heater is positioned relative to the inner pipe to form an air gap between the heater and the inner pipe.
11. The aerosol generating device of example 10, wherein the heater comprises:
   a heater body having a cylindrical shape extending relative to the inner pipe;
   a first heater bending portion bent radially outward from a lower end of the heater body and contacting a lower inner circumferential surface of the inner pipe; and
   a second heater bending portion bent radially outward from an upper end of the heater body and contacting an upper inner circumferential surface of the inner pipe,
   wherein the air gap is an area defined by the heater body, the first heater bending portion, the second heater bending portion, and an inner circumferential surface of the inner pipe.
12. An aerosol generating device comprising:
   a heater having an elongated shape that defines an insertion space;
   an inner pipe positioned relative to an outer side of the heater;
   an induction coil positioned relative to the inner pipe and proximate to the heater, wherein the induction coil is configured to cause the heater to generate heat in accordance with current flowing through the induction coil;
   an outer pipe shaped to surround the inner pipe and the induction coil.
13. The aerosol generating device of example 12, wherein the inner pipe comprises:
   an inner pipe body extending relative to a portion of an inner circumferential surface of the outer pipe, wherein the induction coil surrounds a portion of an outer side of the inner pipe body;
   a first inner pipe bending portion bent radially outward from a lower end of the inner pipe body and contacting a portion of the inner circumferential surface of the outer pipe, the first inner pipe bending portion supporting a lower end of the induction coil; and
   a second inner pipe bending portion bent radially outward from an upper end of the inner pipe body and contacting a portion of the inner circumferential surface of the outer pipe, the second inner pipe bending portion covering an upper end of the induction coil.
14. The aerosol generating device of example 12, wherein the heater is positioned relative to the inner pipe to form an air gap between an outer side of the heater and an inner side of the inner pipe, wherein the heater comprises:
   a heater body having a cylindrical shape extending relative to the inner pipe;
   a first heater bending portion bent radially outward from a lower end of the heater body and contacting a portion of a lower inner circumferential surface of the inner pipe; and
   a second heater bending portion bent radially outward from an upper end of the heater body and contacting a portion of an upper inner circumferential surface of the inner pipe.

## Claims

1. An aerosol generating device comprising:
a body (10) that is elongated;
a pipe (20) that is disposed in the body (10) and defines an insertion space (S); and
a heater (131) that has a cylindrical shape surrounding the insertion space (S) to provide heat to the insertion space (S),
wherein the heater (131) comprises:
a heater body (1311) having a cylindrical shape that extends parallel to the pipe (20);
a first heater bending portion (1312) bent from a first end of the heater body (1311) in a radial direction so as to be supported on the pipe (20); and
a second heater bending portion (1313) bent from a second end of the heater body (1311) in the radial direction so as to be supported on the pipe (20), and
wherein an air gap (24) is formed between the heater body (1311) and the pipe (20),
wherein the pipe (20) comprises an inflow passage (S4) that extends in a longitudinal direction of the body (10) and provides communication between the insertion space (S) and an outside of the pipe (20),
wherein the inflow passage (S4) has a diameter less than a diameter of the heater (131), and
wherein the inflow passage (S4) comprises:
a first flow passage connected to the insertion space (S); and
a second flow passage configured to connect the first flow passage and the outside of the pipe (20), and
wherein the first flow passage has a diameter less than a diameter of the second flow passage.

2. The aerosol generating device of claim 1, further comprising a third flow passage (141, 142, 143) configured to connect the second flow passage and an outside of the body (10),
wherein the third flow passage (141,142,143) has a diameter less than the diameter of the second flow passage.

3. The aerosol generating device of claim 2, wherein the third flow passage (141,142,143) provides a direct connection between the outside of the body (10) and the pipe (20).

4. The aerosol generating device of claim 1, further comprising:
a first wire (132) wound around an outer circumferential surface of the heater (131);
a battery (11) embedded in the body (10) and configured to provide a current to the wire (132); and
a controller (12) configured to control the current supplied to the wire (132) from the battery (11).

5. The aerosol generating device of claim 1, further comprising a sensing circuit (152) that is disposed adjacent to the first heater bending portion (1312) and surrounds the insertion space (S), the sensing circuit (152) being electrically connected to a second wire (153).

6. The aerosol generating device of claim 1, further comprising a cap (23) configured to connect the insertion space (S) to an outside of the body (10), the cap (23) defining an insertion hole (S3) that is connected to one end of the pipe (20),
wherein the cap (23) has a cylindrical shape and has an inner diameter that corresponds to an inner diameter of the heater (131).

7. The aerosol generating device of claim 6, wherein the inner diameter of the cap (23) is equal to the inner diameter of the heater (131), such that an inner circumferential surface of the cap (23) and an inner circumferential surface of the heater (131) are aligned in parallel.

8. The aerosol generating device of claim 7, wherein the first heater bending portion (1312) has an outer diameter greater than the inner diameter of the cap (23).

9. The aerosol generating device of claim 8, wherein the second heater bending portion (1313) has an outer diameter that corresponds to the outer diameter of the first heater bending portion (1312).
